# EUROPEAN PATENT APPLICATION

(11) **EP 2 891 904 A1**
(43) Date of publication of application: **08.07.2015**
(21) Application number: 14150332.6
(22) Date of filing: 07.01.2014
(51) Int. Cl.: G01W 1/10

(54) **Solar irradiance forecasting**

(71) Applicant: ABB Technology AB, 8050 Zürich (CH)
(72) Inventor: Dominguez, Luis, Brugg 5200 (CH); Mercangoez, Mehmet, 4332 Stein (CH); Cortinovis, Andrea, 8953 Dietikon (CH); Zeydan, Burak, Istanbul (TR)
(74) Representative: ABB Patent Attorneys

(57) **Abstract**

The present invention is concerned with the operation of solar power plants such as Photo Voltaic (PV) or Concentrated Solar thermal Power (CSP) plants. The invention involves recursive updating of estimated parameters pertaining to pre-defined and physically motivated cloud evolution models that are instantiated and assigned to clouds identified in images taken by a ground-based visible-light camera. Identification of clouds, which includes assigning individual pixels of an image to one or several identified clouds, and selection of matching cloud models invoke some elaborate complexity beyond conventional pixel-wise image processing. This ultimately allows to predict a cloud-wise, as opposed to a pixel-wise, evolution based on cloud evolution models with a limited number of estimated parameters.

## Description

### FIELD OF THE INVENTION

The invention is concerned with the operation of solar power plants such as Photo Voltaic (PV), Concentrated Photovoltaic (CPV), or Concentrated Solar thermal Power (CSP) plants, and more specifically relates to a way of short-term forecasting solar irradiance on the absorbing or reflecting elements of the plant.

### BACKGROUND OF THE INVENTION

One of the main problems encountered in the operation of solar power plants relates to the motion of clouds and changing atmospheric conditions such as wind speed, turbidity, air mass levels that may reduce electric power generation with respect to a plan level. Cloud motion blocks the rays irradiated by the sun and projects shadows during periods ranging from several seconds to several minutes or even hours, depending on the size of the cloud, and inducing different levels of intermittency in the power generation. Intermittency in the power generated is often quantified by a ramp rate and in turn creates disturbances to voltage and frequency levels required for the operation of a power grid connected to the solar power plant.

Systems have been devised for predicting sky conditions above solar plants, and for linking the sky conditions to the irradiance and thus to the maximum possible power that can be generated. The actuation possibilities of the solar plants can then be utilized to produce power at or below this maximum possible power in order to smoothen the ramp rates. US 2010/0309330 discloses a method for forecasting shadowing for a photovoltaic system, including the provision of measures for maintaining a minimum of supplied power to the power grid. The method includes combining a plurality of contiguous pixels having identical luminous intensity into a group, and monitoring migration of the group across an imaged area.

A publication by Chi Wai Chow et al. entitled "Intra-hour forecasting with a total sky imager at the UC San Diego solar energy testbed", Solar Energy, 85 (2011) 2881-2893, discloses processing sky images taken every 30 seconds to determine cloud velocity and direction of motion through a cross-correlation method (CCM) applied to two consecutive sky images. The sky image is partitioned into subsets of pixels of equal size. The CCM finds the position that best matches each given subset of pixels in the previous sky image within the current image. The CCM yields a wind vector (direction and speed) with the largest cross-correlation coefficient that specifies the quality of the match.

In general, the CCM obtains an accurate motion on inhomogeneous areas which have high contrast of pixel values, such as a cloud with a sharp boundary in a clear sky. To forecast cloud cover, the cloud map at time t₀ is advected at the speed and direction of the global vector determined from cross-correlating the images at time to and to - dt (dt = 30 seconds). Accordingly, the system disclosed relies on optical-flow based, pixel-wise image processing devoid of any physically motivated model, and incidentally included a camera with a mechanical sun occluder.

In the patent application EP 1489714, a dynamic system quantity or signal such as amplitude or angle of the voltage or current at a selected node of an electric power system is sampled, i.e. measured at discrete time intervals, and a series comprising several of the measured values of said system quantity is generated. From this series, parameters of a parametric model representing the dynamic behavior of a the power system are estimated. This process is carried out in an adaptive manner, i.e. every time a new value of the system quantity is available, the parameters of the model are recursively updated by means of recursive least square (RLS) or adaptive Kalman Filtering (KF) techniques. This process enables an almost instantaneous analysis of the state of the power system as compared to a non-adaptive identification process relying on the analysis of sampled data collected over a time-window of several minutes and evaluated only at the end of this time-window.

### DESCRIPTION OF THE INVENTION

It is therefore an objective of the invention to improve forecasting of short-term cloud events based on visible-light imagery. This objective is achieved by a method and a system according to the independent claims. Preferred embodiments are evident from the dependent claims.

According to the invention, short-term solar irradiance is forecast for a base unit, or base element, of a solar power plant such as a Photo Voltaic (PV) plant or a Concentrated Solar Thermal Power (CSP) plant with a total absorbing or reflecting surface in excess of 100 square meters. In the context of the present invention, a base unit may be one of an individual PV panel, a section of a CSP mirror channel, or any triangle or rectangle in a triangulation grid or coordinate system spanning the area of the solar power plant. The base unit extends typically over an area with a lower limit of one to five and an upper limit of ten to twenty square meters. Accordingly, the solar power plant can be seen as an assembly, or as a collection, of electrically or fluidly interconnected base units. The absorbing or reflecting surfaces of the base units need not be adjacent but may be separated from each other by non-absorbing or non-reflecting zones, for instance in case of a city with a high concentration of rooftop solar panels. The method includes the following steps:

Producing, with a ground-based camera equipped with suitable wide-angle, including fish-eye, lenses, a series of consecutive visible-light images of at least a part of the sky above the solar plant. An inter-image delay between two successive images may be adaptively chosen in order to allow tracking of individual clouds, and typically be of the order of one to ten seconds.

Identifying, by an image processing module and in the series of images, a cloud, or more precisely, a series of shapes attributable to "one cloud". This may be done by means of an assignment algorithm.

Providing, or selecting, based on features of the identified cloud including cloud shape or cloud texture such as contour, gradient of brightness, and edge characteristics of the identified cloud, a cloud model or type. The cloud model may be known e.g. as cirrus, stratus, or cumulus, and includes a parameterized cloud evolution model including cloud motion and cloud size change.

Forecasting, for a future point in time, complete, partial, or no shadowing of the base unit due to an evolution of a projected ground shadow and of a transparency of the identified cloud. The evolution of the projected ground shadow is predicted based on the parameterized cloud evolution model and the present position of the sun.

Recursively updating, based on an observed cloud evolution of the identified cloud, an estimated parameter of the parameterized cloud evolution model of the identified cloud. Typical estimated model parameters include cloud base height or altitude, speed, acceleration, shape, shape change rate, of the cloud evolution model, wherein precise values of the estimated model parameters are not, or only approximately, measurable by dedicated sensors. The observed cloud evolution may include evaluation of a later sky image in the series in order to identify errors in the prediction, which errors are then used to drive recursive estimation schemes. The recursive, or adaptive, parameter update is determined via advanced state estimation techniques such as Kalman filtering, or Moving Horizon Estimation (MHE). The update is executed every time a new sky image is available, or at a reduced rate determined from observed rate of change values.

In summary, the invention involves recursive updating of estimated parameters pertaining to pre-defined and physically motivated cloud evolution models that are instantiated and assigned to the clouds identified in the images. Identification of clouds, which includes assigning individual pixels of an image to one or several identified clouds, and selection of matching cloud models invoke some elaborate complexity beyond conventional pixel-wise image processing. This ultimately allows to predict a cloud-wise, as opposed to a pixel-wise, evolution based on cloud evolution models with a limited number of estimated parameters. The latter are updated individually for each identified cloud, possibly leading to different values of a same parameter, such as the cloud base height, for different instances of a same cloud model.

The proposed procedure presents a sky monitoring and solar irradiance forecasting system which provides real time information on the state of the sky as well as a short-term prediction of sky conditions for efficiently integrating the operation of PV and CSP systems into the power grid. It only requires moderate on-site processing power far beneath the computing power required for the pixel-wise processing of consecutive images according to the cross-correlation method (CCM). The proposed solution may operate in autonomous embodiments involving a single ground-based camera and disregarding remote binary pyranometer readings and air flow or humidity measurements at altitude. The proposed solution proves to perform well for cloud events on a short-term time scale of 5 to 15 minutes, including disappearance and formation of clouds, which may typically lead to a 10-30 % decrease of electrical power output for thin clouds and to a 50-70 % decrease for thick clouds.

In preferred variants of the invention, an electrical power output for a plurality of electrically or fluidly interconnected base units and including one or several PV strings or CSP channels is forecast. The latter involves the forecasted shadowing of the interconnected base units including partial shading derived from cloud thickness, as well as a parameterized model of a converter means converting solar power irradiated on the absorbing or reflecting surfaces of the interconnected base units to electrical power. The converter means may include a DC/AC inverter for PV string of electrically connected base units, or a steam turbine and generator in the CSP case. Observed electrical power output of the converter means at a future point in time then permits to recursively update parameters of the cloud evolution model and/or of a converter model of the converter means.

In an advantageous embodiment of the invention, the effects of weather phenomena such as high altitude haze or ground fog that do escape the cloud identification process but still contribute to a reduction in solar irradiance level are taken into account. To that end, a global irradiance model describing the solar irradiance at a certain moment (day and time) and absent any clouds or other non-cloud weather phenomena is introduced. The global irradiance model, together with non-cloud weather forecast data obtained from a weather forecast service and including haze or fog formation, are evaluated to produce a solar irradiance forecast in the absence of any identifiable clouds. Based on the latter as well as on a converter model of the converter means, a baseline electrical power output is forecast. An observed electrical power output of the converter means at a future point in time then permits to recursively update parameters of the global irradiance model and/or of a converter model of the converter means.

In an advantageous embodiment of the invention, the camera comprises a High Dynamic Range (HDR) such that each image is a superposition of a plurality of up to eight pictures, or shots, taken within less than one second. Each picture is taken with a different one of a set of exposure characteristics such as time or aperture. The embodiment then comprises detecting, or even predicting, a shadowing of the camera lens, and adapting the set of exposure characteristics accordingly. The adaptation generally involves increasingly longer exposure times to account for the sun being occluded by some passing clouds, and allows to operate without any permanent mechanical sun occluder.

In advantageous embodiments of the invention, a cloud height for the identified cloud is determined from additional and exclusively real-time information as a best estimate prior to the recursive update. A present cloud height may be derived from a temperature of the identified cloud, in turn being measured by means of a ground based thermal imaging, or infrared, camera. A present cloud height may also be determined by stereovision from a second visible-light image of the sky above the solar plant that is time-wise co-incident with a first image taken by the first, ground-based camera. The second image is produced with a second camera at a location distant from the location of the first camera by one kilometre or more. An image analyser will then identify a same cloud on the second image and on the first image.

In a further preferred variant of the invention, observed irradiance values obtained from irradiance sensors or pyranometers dispersed across the area of the solar power plant are collected as indicators of the observed cloud evolution. These readings may then serve as a basis for the recursive updating of the parameters of the cloud evolution model, in addition to, or even supplanting, the later image in the series.

According to the invention, a system for forecasting solar irradiance for a base unit of a solar power plant comprises a ground-based visible light camera and data processing means at the location of the solar power plant including the image analyser and a forecasting module communicatively connected to the camera. Locating the base unit shadowing forecasting facility at the site of the camera does not require broadband communication networks handling the flow of large information such as the digital sky images at a high rate. Accordingly, the present invention also relates to a computer program product including computer program code for controlling one or more processors or data processing means of a device adapted to be communicatively connected to the ground-based visible light camera, particularly, a computer program product including a computer readable medium containing therein the computer program code.

According to the invention, a predicted electrical power output, or output change, is used to operate the solar plant, specifically the converter means connected to, and powered by, the interconnected base units. The actuation possibilities of the latter, including intentionally operating an inverter off a Maximum Power Point (MPP), may then be utilized to produce electrical power below a maximum power, and thus smoothen ramp rates in the power system. Alternatively, predicted electrical power output information can be used to coordinate the operation of energy storage systems or the output of other co-located power generating means such as diesel engines to smoothen the total power output at a certain node. In case all solar plants in a given wide area are equipped with the prediction system of this invention, the total information can be made available to a system operator via e.g. a SCADA system and can be used for other power grid balancing means..

### BRIEF DESCRIPTION OF THE DRAWINGS

The subject matter of the invention will be explained in more detail in the following text with reference to preferred exemplary embodiments which are illustrated in the attached drawings, in which:

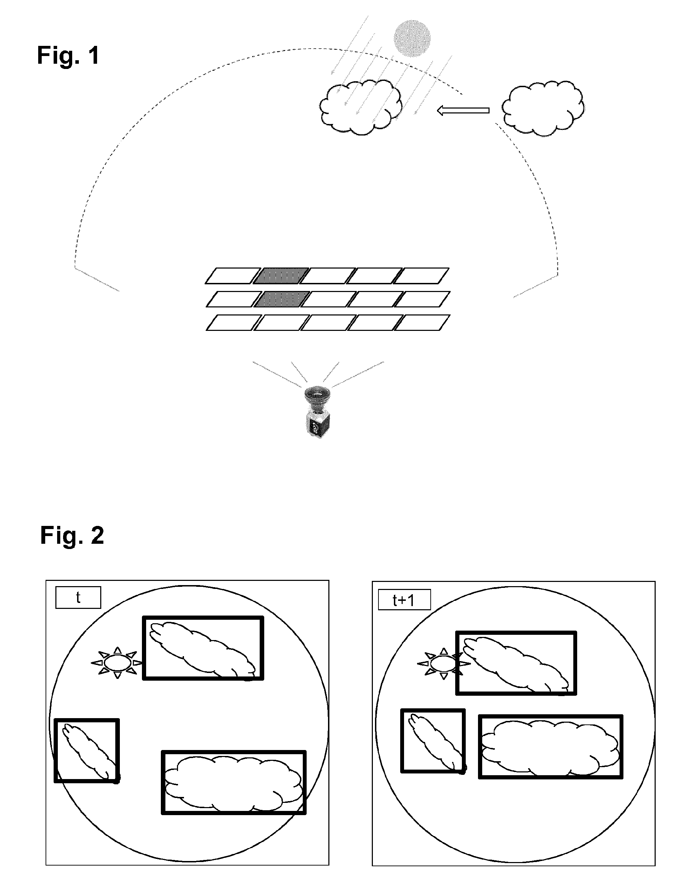

Fig.1 schematically shows the base ingredients of the invention, including a PV plant with three rows, or strings, of five PV panels as the base units, a ground-based camera located next to the PV plant, the sun with its trajectory across the sky, and a cloud moving from right to left and shadowing two of the PV panels.
Fig.2 depicts two successive sky images recorded by the camera, with three identified clouds gently moving towards the sun.

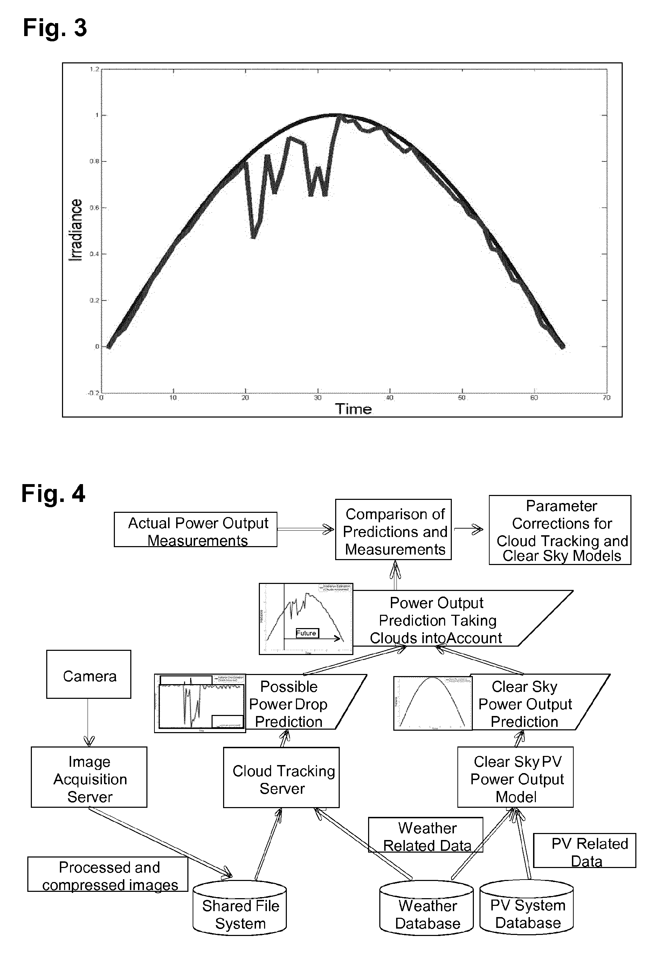

Fig.3 depicts solar irradiance as a function of time. The smooth line corresponds to a cloud-free estimation according to a global irradiance model (or to a measurement of the global horizontal irradiance), while the shaky line represents actual measured values.
Fig.4 shows an exemplary arrangement of the steps for the PV power output prediction part of the algorithm.

The reference symbols used in the drawings, and their primary meanings, are listed in summary form in the list of designations. In principle, identical parts are provided with the same reference symbols in the figures.

### DETAILED DESCRIPTION OF PREFERRED EMBODIMENTS

The main components involved by the invention include sensors, communication and information processing infrastructure, and auxiliaries as characterized below in an exemplary manner.

*Sensors:* The main sensor is a sky camera based on either a CMOS or CCD technology equipped with a wide angle lens, or concave mirror arrangements that can at least track the sun in the sky throughout the day. For the location close to the camera the clouds that are around the sun or moving closer to the sun are the most important and most of the benefit regarding solar power forecasting can be gained already by tracking what is happening close to the sun as opposed to tracking clouds that are very far from the image of the sun in the sky at the current location. An alternative to a wide angle view is a camera that is connected to a motor that can track the sun or that can regularly scan the whole sky. The images can be stitched together to form the total sky image.

Multiple cameras that are separated with a long distance can be used to produce what is known as stereo vision and stereo vision can be used to estimate the distance of the clouds to the cameras enabling the possibility to estimate cloud height. Another way to estimate cloud height is to use thermal imaging where temperature information about clouds can be used to estimate their height. Laser range finders can also be another alternative. Basic cloud height information (cloud layers cloud base height etc.) is typically available from meteorological reports for a given location with longer update horizons than considered in this system but this information can be used in combination with the timing of a shading event on that day to correct the estimate on cloud base height using the MHE algorithm. Image recognition of cloud types can also be used to make height estimates for different cloud types. A learning algorithm is envisioned to be built using past data regarding the types of clouds.

Irradiance sensors are not mandatory in case measurements regarding solar power output are available, but since the accuracy of inverting the relationship between solar power output, which is effected by many other factors (e.g. temperature, cleanliness of PV surfaces or mirrors etc.) to irradiance is limited, actual measurements of irradiance can be very helpful.

Measurements of other weather related factors such as wind speed, humidity, temperature etc. as well as access to real-time satellite imagery services can be useful but are not necessary either.

Solar power output measurement takes into account the distributed nature of the solar generation systems. In case of PV systems the connection topology and the location of the inverter have a big impact regarding the spatial performance of the forecasting system. In case of CSP systems access to temperature, steam pressure and flow measurements from individual headers are important.

*Communications:* Depending on the particular use case the system of this invention includes different communication subsystems. In an exemplary stand-alone arrangement all sensors can be physically connected to one information processing unit and the information processing unit can in turn be physically connected to the system making use of the irradiance predictions. In this case the information processing unit has to have the communication interfaces with all the sensors and the target system. In this case the physical links can be serial cables or USB connections or any other general purpose or special connection and the communication can be based on standard or specialized protocols (IEC 61850, Profibus, Modbus etc.).

*Information processing:* Either locally present as an industrial PC or as an embedded processing unit or executed on a server in a networked arrangement. At the heart of the system there is a collection of algorithms that collect the available measurements and produce irradiance estimates and optionally any other post processing using the irradiance estimates e.g. a control action, a visualization of the irradiance estimates and sky condition, or any other signal or collection of signals based on the irradiance estimates. For irradiance and solar power output prediction the algorithms rely on three model families 1.) clear sky irradiance models 2.) cloud motion models 3.) solar power output models. Additionally, there can be databases constructed using learning algorithms and historical data that can be used to determine from sky images which irradiance or cloud motion models or which model parameters should be used for the different clouds that are detected in the image where cloud features may correspond to spectral, textual, contextual and/or physical properties. Models that link solar power output to irradiance are also needed to convert back observed solar power output to irradiance incident on a given location of the solar power generation surfaces. In turn predicted solar irradiance levels can be converted to power output predictions using again the same models. As described earlier an MHE framework is used to produce the estimates and predictions in a rolling horizon. Depending on the arrangement the produced output can be solar irradiance or solar power output for a given location or for a complete power plant. Optionally, control algorithms can be considered which make use of the predicted power output to create a curtailment for various purposes such as controlling ramp rates.

*Auxiliaries*: For the camera unit there are many requirements such as power provision, heating or cooling, weather and dust proofing etc. These requirements necessitate the use of various auxiliary systems. In case the power needs to be generated at the camera system PV panels can be used along with a battery system to ensure smooth operation. There can be a local health monitoring system for controlling the cooling and heating of the unit (requires temperature measurements) as well as the cleanliness. An optional sprinkler system can be used to wash and clean the camera enclosure. There can be a liquid crystal coated cover that can change from opaque to transparent to provide optional protection to the optics without moving parts. Alternatively a mechanically operated cover can be considered to open and close the unit. If the unit is to be set up in a wireless way there has to be an antenna to receive additional information and to communicate the results. If a stand-alone arrangement is considered information processing units with its hard drives etc. has to be built in. A modular arrangement is preferred for ease of manufacturing and service. An adjustable camera holder can be used to elevate the camera to a location unobstructed by surrounding structures and terrain.

The following steps describe how the algorithm execution takes place for a possible embodiment of the invention with a single sky camera equipped with a fisheye lens, and with a pyranometer arranged for the short term forecasting of PV power output.

The image analysing system processes the last image using all available methods to detect cloud objects in the sky, their type, their location. If meteorological information is available corresponding possible elevation information is calculated for a cloud type. If a thermal imaging camera is used the temperature information is converted to elevation information using thermal buoyancy models and given meteorological information.

Exemplary execution of the Moving Horizon Estimation MHE and prediction includes the following steps:
- recall final state of the sky from memory and the cloud object tracks and receive all current information in the MHE buffer
- carry out a calculation to match current objects and the previous tracks using an assignment algorithm such as the Hungarian algorithm
- choose appropriate cloud motion models for every object, assimilate cloud height information for every cloud object and detect current state solving the MHE problem - the state can consist of location, speed and acceleration of the clouds, their areas and the rate of change of their areas. At this step the algorithm will readjust expected locations and elevation of clouds to match observed irradiance at the pyranometer locations and observed PV power generation with the predicted irradiance and predicted PV power generation. Any errors in the prediction will therefore be eliminated as much as possible and in the next set of predictions the accuracy will increase.
- extrapolate into the future using the cloud motion models the location and size of the cloud objects, in the form of a cloud grid indexed in time and altitude classes
- compare current irradiance levels and clear sky model and depending on the mismatch update the parameters of the clear sky model and forecast clear sky irradiance levels
- match sun location and cloud locations to detect shading in the ground grid indexed in time. Determine the irradiance drop using pre-computed metrics for the given shading based on the cloud type and thickness causing the shading event
- merge all information to create irradiance levels for the future for the ground grid indexed in time, and calculate, using the ground grid irradiance levels and a matching configuration PV power plant model, the corresponding power output levels indexed in time for the future. The process inherently accounts for two dimensions - the spatial dimension which is the prediction of irradiance at a given location and the temporal dimension which is the prediction of irradiance in time into the future.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A method for forecasting solar irradiance for a base unit of a solar power plant, comprising the steps of
- producing, with a ground-based camera, a series of visible-light images of the sky above the solar power plant,
- identifying, by an image processing module and in the series of images, a cloud,
- providing, based on features of the identified cloud including cloud shape or cloud texture, a cloud evolution model,
- forecasting, based on an evolution of a shadow of the identified cloud as predicted by means of the cloud evolution model, shadowing of the base unit, and
- recursively updating, based on an observed cloud evolution of the identified cloud, parameters of the cloud evolution model.

2. The method of claim 1, **characterized in that** it comprises
- forecasting an electrical power output for a plurality of interconnected base units, based on forecast shadowing of each base unit of the plurality of interconnected base units, and based on a parameterized converter model of a converter means generating electrical power from solar irradiance on the interconnected base units.

3. The method of claim 2, **characterized in that** it comprises
- recursively updating, based on an observed electrical power output of the converter means, parameters of the cloud evolution model and/or of the converter model.

4. The method of claim 2, **characterized in that** it comprises
- forecasting, based on non-cloud weather forecast data, based on a global irradiance model, and based on the converter model, a baseline electrical power output, and
- recursively updating, based on an observed electrical power output of the converter means, parameters of the global irradiance model and/or of the converter model.

5. The method of claim 1, wherein the camera comprises a High Dynamic Range HDR such that each image is a superposition of a plurality of pictures each taken with a different one of a set of exposure characteristics, **characterized in that** the method comprises
- detecting a shadowing of the camera and adapting the set of exposure characteristics.

6. The method of claim 1, **characterized in that** it comprises
- measuring a temperature of the identified cloud by means of a thermal imaging camera, and deriving an estimated cloud height therefrom.

7. The method of claim 1, **characterized in that** it comprises
- producing, with a second camera, a second visible-light image of the sky above the solar plant,
- identifying, by an image analyser, a same cloud on the second image and on a co-incident image of the ground-based camera, and
- estimating a cloud height there from by stereovision.

8. The method of claim 1, **characterized in that** it comprises
- recursively updating, based on an observed pyranometer reading at the base unit, parameters of the cloud evolution model.

9. A system for forecasting solar irradiance for a base unit of a solar power plant, comprising a ground-based visible light camera and data processing means communicatively connected to the camera, the camera and the processing means being configured to execute the steps of any of claims 1 to 8.

10. A use of forecast electrical power output according to claim 2 to operate the solar power plant and/or to operate auxiliary power generation.
